# EUROPÄISCHE PATENTSCHRIFT

(11) **EP 3 698 263 B1**
(45) Veröffentlichungstag und Bekanntmachung des Hinweises auf die Patenterteilung: **11.03.2026**
(21) Anmeldenummer: 18789381.3
(22) Anmeldetag: 17.10.2018
(51) Int. Cl.: G06F 21/12, H04W 12/08, H03K 17/945

(54) **SICHERHEITSSYSTEM FÜR EIN ELEKTRONISCHES GERÄT EINES FAHRZEUGS, ELEKTRONISCHES GERÄT, FAHRZEUG, VERFAHREN**
SECURITY SYSTEM FOR AN ELECTRONIC DEVICE, ELECTRONIC DEVICE, VEHICLE, METHOD
SYSTÈME DE SÉCURITÉ POUR UN DISPOSITIF ÉLECTRONIQUE, DISPOSITIF ÉLECTRONIQUE, VÉHICULE ET PROCÉDÉ

(30) Priorität: 19.10.2017 DE 102017218654
(43) Veröffentlichungstag der Anmeldung: 26.08.2020
(73) Patentinhaber: Robert Bosch GmbH, 70442 Stuttgart (DE)
(72) Erfinder: STEMMLER, Michael, 75382 Althengstett (DE)
(86) Internationale Anmeldenummer: PCT/EP2018/078357
(87) Internationale Veröffentlichungsnummer: WO 2019/076958

(56) Entgegenhaltungen:
- EP-A1- 2 892 199
- DE-A1- 10 359 487
- US-A1- 2007 210 743
- US-A1- 2009 177 352

## Beschreibung

Die Erfindung betrifft ein Sicherheitssystem für ein elektronisches Gerät eines Fahrzeugs, wobei das elektronische Gerät programmierbar ist und eine Schnittstelle aufweist, die für den Zugriff und/oder zum Programmieren des elektronischen Geräts durch einen externen Zugriff nutzbar ist, mit einem Sicherheitsmodul, das zum Verhindern eines unbefugten Zugriffs und/oder eines unbefugten Programmierens des elektronischen Geräts ausgebildet ist.

Weiterhin betrifft die Erfindung ein elektronisches Gerät für ein Fahrzeug mit einem derartigen Sicherheitssystem, ein Fahrzeug mit zumindest einem elektronischen Gerät mit einem derartigen Sicherheitssystem, sowie ein Verfahren zum Betreiben eines derartigen Sicherheitssystems, eines elektronischen Geräts mit einem derartigen Sicherheitssystems oder eines Fahrzeugs mit zumindest einem elektronischen Geräts mit einem derartigen Sicherheitssystems.

### Stand der Technik

Elektronische Geräte, insbesondere Steuergeräte oder Sensoren, beispielsweise für Motoren oder Getriebe, oder für die Sicherheit relevante Geräte, beispielsweise für die Funktionalität des Fahrzeugs oder den Zugang zum Fahrzeug, weisen häufig sicherheitsrelevante Funktionen auf, die vor unautorisiertem Zugriff geschützt werden müssen, insbesondere vor unautorisiertem Programmieren, beispielsweise Änderungen von Steuerkennlinien, Kilometerständen und/oder Programmversionen, und/oder vor Änderungen der Integrität und/oder einer Beschädigung des Programms, so dass unerwünschte Fehlregelungen auftreten. Derartige elektronische Geräte verfügen außerdem über Schnittstellen über die nicht nur die Kommunikation im Betrieb funktioniert, sondern auch das Programmieren, das beispielsweise zur Konfiguration des Geräts genutzt wird. Das Programmieren oder die Konfiguration ist häufig über einen Fern-Zugriff möglich. Um elektronische Geräte vor einem solchen unzulässigen Zugriff zu schützen, beispielsweise den Zugriff zu blockieren, eine Funktion des Geräts zu blockieren, oder um ein unzulässiges Programmieren des Geräts zu verhindern, werden Abfragen zur Authentifizierung eines Zugriffs eingesetzt. Diese Technik bietet allerdings nur eine geringe Sicherheit, da nicht auszuschließen ist, dass solche Systeme einer Software-basierten Authentifizierung umgangen werden können. Aufgrund zunehmender Gefahr durch die Umgehung der Software-basierten Authentifizierung werden deshalb verbesserte Algorithmen und Funktionen benötigt, um ein elektronisches Gerät vor unbefugtem Zugriff, insbesondere unbefugtem Programmieren, zu schützen.

Die Offenlegungsschrift US 2007/0210743 A1 offenbart ein System, das dazu ausgebildet ist, zu ermitteln, ob sich ein das System aufweisendes Fahrzeug in einem bestimmten Bereich befindet. Das System ist außerdem dazu ausgebildet, eine Umprogrammierung eines Steuergeräts des Systems zu verhindern, wenn sich das Fahrzeug außerhalb des bestimmten Bereichs befindet und die Umprogrammierung zu erlauben, wenn sich das Fahrzeug innerhalb des bestimmten Bereichs befindet.

### Offenbarung der Erfindung

Die Erfindung mit den Merkmalen des Anspruchs 1 hat den Vorteil, dass ein Sicherheitssystem für ein elektronisches Gerät eines Fahrzeugs bereitgestellt wird, welches einen Zugriff und/oder ein unbefugtes Programmieren des elektronischen Geräts verhindert, insbesondere ein nachträgliches Programmieren, nachdem das Gerät seinem bestimmungsgemäßen Gebrauch zugeführt wurde.

Das erfindungsgemäße Sicherheitssystem für ein elektronisches Gerät eines Fahrzeugs mit den Merkmalen des Anspruchs 1 zeichnet sich dadurch aus, dass das Sicherheitssystem einen Sensor zur Erfassung einer Position und/oder Ausrichtung des elektronischen Geräts im und/oder am Fahrzeug aufweist.

Dadurch wird die tatsächliche Position und/oder die Ausrichtung des elektronischen Geräts im und/oder am Fahrzeug erfasst und dem Sicherheitsmodul verfügbar gemacht. Unter einem Zugriff wird vorliegend insbesondere das Auslesen von Daten, beispielsweise des Programmcodes verstanden. Unter einem Programmieren wird vorliegend insbesondere eine Veränderung oder zumindest teilweise Veränderung von Programmen oder Software, insbesondere der Änderung des Quellcodes von Programmen verstanden. Bevorzugt wird unter einem Programmieren auch eine Konfiguration oder Codierung verstanden. Unter einem Sicherheitsmodul wird insbesondere ein Element verstanden, das einen Prozessor, einen Speicher und mindestens eine Schnittstelle zur Datenübertragung aufweist. Das Sicherheitsmodul ist dazu ausgebildet, eine Abweichung oder Übereinstimmung von der vom Sensor erfassten Position und/oder Ausrichtung des elektronischen Geräts, also der tatsächlichen Position und/oder Ausrichtung, mit einer erwarteten Position und/oder Ausrichtung zu erkennen, und bei einer erkannten Übereinstimmung oder lediglich einer geringfügigen Abweichung den Zugriff und/oder das Programmieren des elektronischen Geräts zu verhindern. Dadurch wird ein unbefugter Zugriff und/oder ein unbefugtes Programmieren des elektronischen Geräts verhindert, wenn dieses im Fahrzeug bestimmungsgemäß verbaut ist, also sich in der erwarteten Position und/oder Ausrichtung im und/oder am Fahrzeug befindet. Bevorzugt werden Anfragen an das elektronische Gerät ignoriert. Vorteilhafterweise wird durch das erfindungsgemäße Sicherheitssystem ein unbefugter Zugriff und/oder ein unbefugtes Programmieren des elektronischen Geräts verhindert, das insbesondere nicht oder nicht alleine von einer Authentifizierung zur Freigabe des Zugriffs und/oder des Programmierens des elektronischen Geräts abhängig ist. Dadurch ist das elektronische Gerät nicht ohne eine Veränderung des Einbaus und/oder der elektrischen Verbindung programmierbar, insbesondere nicht durch einen Fern-Zugriff. Dadurch wird ermöglicht, dass eine Manipulation an dem elektronischen Gerät verhindert werden kann, insbesondere im fertigen Einbau des elektronischen Geräts im und/oder am Fahrzeug und/oder im Betrieb des Fahrzeugs. Vorzugsweise können bereits implementierte Authentifizierungs-Verfahren parallel eingesetzt werden. Vorzugsweise werden die Position und/oder die Ausrichtung des elektronischen Geräts vom Sensor kontinuierlich oder in bestimmten zeitlichen Abständen erfasst. Dadurch ist erkennbar, wenn das Gerät aus der vorgegebenen Position und/oder Ausrichtung entfernt wird und/oder ob sich während des Zugriffs und/oder des Programmierens und/oder während eines externen Zugriffs die Position und/oder Ausrichtung des elektronischen Geräts ändert. Vorzugsweise ist das Sicherheitsmodul dazu ausgebildet, die Abweichung oder Übereinstimmung von mehreren elektronischen Geräten zu erkennen. Vorzugsweise weist das Sicherheitssystem mehrere Sensoren zur Erfassung der Position und/oder Ausrichtung des elektronischen Geräts oder mehrerer elektronischer Geräte auf. Dadurch wird ermöglicht mit einem Sicherheitsmodul den Zugriff und/oder das Programmieren mehrerer elektronischer Geräte zu verhindern. Vorzugsweise weist das Sicherheitsmodul einen Datenspeicher auf, in dem Daten über die erwartete Position und/oder Ausrichtung des elektronischen Geräts, Signaturen und/oder Daten zur Authentifizierung der elektronischen Geräte abgelegt sind. Vorzugsweise ist der Zugriff auf das elektronische Gerät nur nach vorheriger Authentifizierung möglich, wobei hinterlegte Signaturen, insbesondere in einem Datenspeicher hinterlegte Signaturen, mit den eingegebenen Signaturen zur Authentifizierung verglichen werden. Vorzugsweise ist der Zugriff auf das Sicherheitsmodul nur nach vorheriger Authentifizierung möglich. Vorzugsweise ist das Sicherheitsmodul als integrierte Schaltung oder integrierter Sensor ausgebildet, insbesondere angeordnet an dem elektronischen Gerät. Vorzugsweise ist die Schnittstelle des elektronischen Geräts eine Remote-Schnittstelle, beispielsweise eine WLAN-Schnittstelle, eine Bluetooth-Schnittstelle oder eine Infrarot-Schnittstelle, über die ein Fern-Zugriff möglich ist, bevorzugt ist die Schnittstelle in eine Fern-wartbare Schnittstelle wandelbar ist. Vorzugsweise verhindert das Sicherheitsmodul den Zugriff und/oder das Programmieren des elektronischen Geräts durch Trennung der Schnittstelle des elektronischen Geräts von einer Stromquelle. Dadurch ist ein externer Zugriff auf das elektronische Gerät nicht mehr möglich. Vorzugsweise tauscht das Sicherheitsmodul mit dem elektronischen Gerät über dessen Schnittstelle Daten aus. Dadurch kann auf die Verwendung einer weiteren Schnittstelle zum Datenaustausch zwischen dem Sicherheitsmodul und dem elektronischen Gerät verzichtet werden.

Gemäß einer bevorzugten Weiterbildung der Erfindung ist vorgesehen, dass das Sicherheitsmodul dazu ausgebildet ist, bei einer erkannten Übereinstimmung die Schnittstelle vollständig oder teilweise zu deaktivieren. Dadurch wird ermöglicht, dass nicht nur das Programmieren des elektronischen Geräts verhindert wird, sondern der gesamte externe Zugriff verhindert wird, wobei insbesondere ein Auslesen von Daten des elektronischen Geräts durch einen externen Zugriff verhindert wird, oder zumindest eine externe Anfrage bei einem Zugriff auf die Schnittstelle ignoriert wird.

Gemäß einer bevorzugten Weiterbildung der Erfindung ist vorgesehen, dass das Sicherheitssystem zumindest eine dem elektronischen Gerät zugeordnete/zuordenbare Schalteinrichtung aufweist, durch deren Betätigung eine für den Zugriff und/oder das Programmieren des elektronischen Geräts notwendige elektrische Verbindung unterbrechbar ist. Dadurch wird ermöglicht, dass der Zugriff und/oder das Programmieren des elektronischen Geräts solange verhindert wird, bis die für den Zugriff und/oder zum Programmieren notwendige Verbindung wieder hergestellt ist. Insbesondere ist die Schalteinrichtung als magnetfeldbetätigbare Schalteinrichtung ausgebildet, die mit einem an einer vorgesehenen Stelle am Fahrzeug angeordneten Magnetfeldgeber zusammenwirkt. Sobald sich das Gerät in der vorgesehenen Position und/oder Ausrichtung befindet, wird die Schalteinrichtung durch das Magnetfeld des Magnetfeldgebers betätigt und dadurch die genannte Verbindung unterbrochen. Sobald das Gerät von der Position entfernt wird, wird die Verbindung wiederhergestellt. Die Schalteinrichtung ist dabei insbesondere im Inneren eines Gehäuses des elektronischen Geräts angeordnet, so dass ihre Position von außerhalb nicht erkennbar und dadurch von unbefugten Personen auch nicht erfassbar ist. Alternativ handelt es sich bei der Schalteinrichtung um eine ansteuerbare Schalteinrichtung, die beispielsweise mit dem zuvor genannten Sensor zusammenwirkt, so dass, wenn das Sicherheitsmodul eine Abweichung von der vorgegebenen Position und/oder Ausrichtung erfasst, die Schalteinrichtung betätigt wird, um die Verbindung zu unterbrechen. Vorzugsweise handelt es sich bei der Schalteinrichtung um eine durch ein Programm ansteuerbare Schalteinrichtung, die mit einem externen Sensor zusammenwirkt, insbesondere einem Erdmagnetfeld-Sensor oder einem Beschleunigungssensor.

Gemäß einer bevorzugten Weiterbildung der Erfindung ist vorgesehen, dass der Sensor in oder an dem elektronischen Gerät oder an dem Fahrzeug angeordnet/anordenbar ist. Dadurch wird eine sichere Erfassung der Position und/oder Ausrichtung des elektronischen Geräts durch den Sensor gewährleistet, da die räumliche Anordnung des Sensors nicht durch einen externen Zugriff veränderbar ist, insbesondere durch einen unbefugten Zugriff. Des Weiteren ist dadurch eine kostengünstige und zeitsparende Montage möglich.

Gemäß einer bevorzugten Weiterbildung der Erfindung ist vorgesehen, dass der Sensor ein berührungsfrei arbeitender Sensor, insbesondere ein Magnetsensor, ein Ultraschallsensor, ein Kamerasensor, ein Lagesensor und/oder ein Ausrichtungssensor ist. In einer weiteren bevorzugten Weiterbildung der Erfindung ist vorgesehen, dass der Sensor ein Berührungs-Sensor ist.

Gemäß einer bevorzugten Weiterbildung der Erfindung ist vorgesehen, dass das Sicherheitsmodul dazu ausgebildet ist, bei einer erkannten Abweichung der Zugriff und/oder das Programmieren des elektronischen Geräts zuzulassen. Dadurch wird ermöglicht, dass das elektronische Gerät, wenn es nicht sicherheitsrelevant im Fahrzeug in der erwarteten Position und/oder Ausrichtung angeordnet ist, einen Zugriff und/oder ein Programmieren des elektronischen Geräts ermöglicht, beispielsweise im ausgebauten Zustand oder in der Werkstatt.

Das erfindungsgemäße elektronische Gerät für ein Fahrzeug mit den Merkmalen des Anspruchs 7 zeichnet sich durch das erfindungsgemäße Sicherheitssystem aus. Dabei ergeben sich für das elektronische Gerät insbesondere die Vorteile, die bereits in Zusammenhang mit dem Sicherheitssystem erläutert wurden.

Gemäß einer bevorzugten Weiterbildung der Erfindung ist vorgesehen, dass das elektronische Gerät als ein Steuergerät des Fahrzeugs ausgebildet ist. Dadurch wird insbesondere der unbefugte Zugriff und/oder das unbefugte Programmieren von sicherheitsrelevanten elektronischen Geräten verhindert. Vorzugsweise ist das elektronische Gerät ein Steuergerät für Motoren oder Getriebe, ein Navigationsgerät, eine Wegfahrsperre oder eine Sicherheitseinrichtung. Vorzugsweise ist vorgesehen, dass das elektronische Gerät zur Prüfung von verschlüsselten Signalen zur weiteren Authentifizierung ausgebildet ist.

Das erfindungsgemäße Fahrzeug mit den Merkmalen des Anspruchs 9 zeichnet sich dadurch aus, dass es zumindest ein elektronisches Gerät und ein dem elektronischen Gerät zugeordnetes erfindungsgemäßes Sicherheitssystem aufweist. Dabei ergeben sich für das Fahrzeug insbesondere die Vorteile, die bereits im Zusammenhang mit dem erfindungsgemäßen Sicherheitssystem und dem erfindungsgemäßen elektronischen Gerät erläutert wurden. Unter einem Fahrzeug wird vorliegend insbesondere ein Personenwagen, ein Lastkraftwagen, ein Bus oder auch ein Boot, ein Schiff oder ein Luftfahrzeug verstanden.

Gemäß einer bevorzugten Weiterbildung der Erfindung ist vorgesehen, dass der Sensor des Sicherheitssystems in oder an dem elektronischen Gerät oder an einer das elektronische Gerät tragenden oder zugeordneten Struktur des Fahrzeugs angeordnet ist. Dadurch kann der Sensor nicht durch einen externen Zugriff manipuliert werden, da die Anordnung des Sensors nicht durch einen externen Zugriff verändert werden kann, insbesondere räumlich zum elektronischen Gerät verändert werden kann. Des Weiteren ist dadurch eine kostengünstige und zeitsparende Montage möglich.

Das erfindungsgemäße Verfahren zum Betreiben eines erfindungsgemäßen Sicherheitssystems, eines erfindungsgemäßen elektronischen Geräts oder eines erfindungsgemäßen Fahrzeugs mit den Merkmalen des Anspruchs 11 zeichnet sich dadurch aus, dass ein unbefugter Zugriff und/oder ein unbefugtes Programmieren des elektronischen Geräts verhindert wird, wenn eine Übereinstimmung der erfassten Position und/oder Ausrichtung des elektronischen Geräts von der erwarteten Position und/oder Ausrichtung erkannt wird. Dabei ergeben sich für das Verfahren insbesondere die Vorteile, die bereits im Zusammenhang mit dem Sicherheitssystem, dem elektronischen Gerät und dem Fahrzeug erläutert wurden.

Weitere bevorzugte Merkmale und Vorteile ergeben sich insbesondere aus dem bereits zuvor Beschriebenen sowie aus den Ansprüchen.

Im Folgenden soll die Erfindung anhand eines Ausführungsbeispiels näher erläutert werden. Dabei zeigen
- Figur 1: eine schematische Darstellung eines Blockschaltbilds des erfindungsgemäßen Sicherheitssystems,
- Figur 2: ein Flussdiagramm zur Erläuterung des Ablaufs des erfindungsgemäßen Sicherheitssystems.

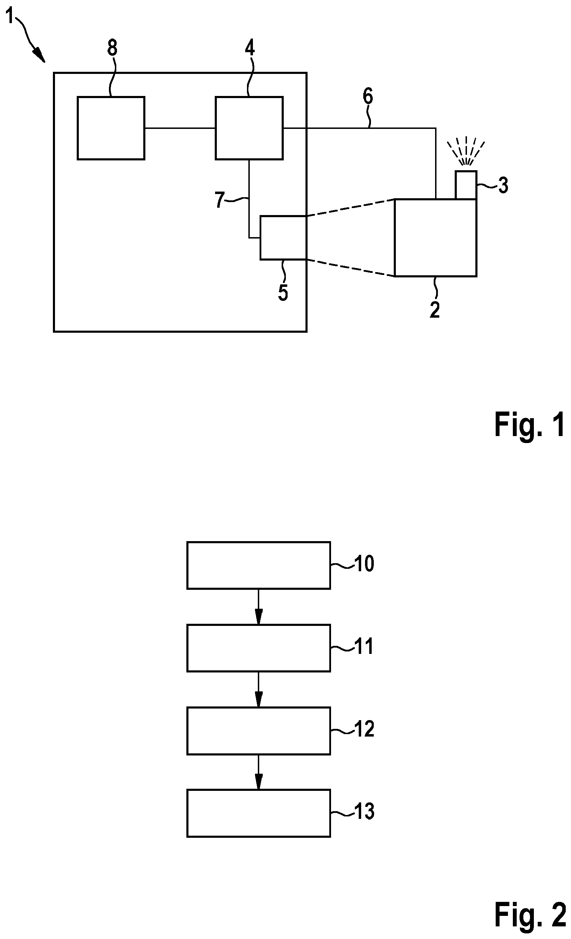

Figur 1 zeigt eine schematische Darstellung eines Blockschaltbilds des erfindungsgemäßen Sicherheitssystems 1 für ein elektronisches Gerät 2 eines Fahrzeugs. Das elektronische Gerät 2 ist programmierbar und weist eine Schnittstelle 3 auf, die für den Zugriff und zum Programmieren des elektronischen Geräts 2 durch einen externen Zugriff nutzbar ist. Das Sicherheitssystem 1 weist ein Sicherheitsmodul 4 auf, das zum Verhindern eines unbefugten Zugriffs und/oder eines unbefugten Programmierens des elektronischen Geräts 2 ausgebildet ist. Das Sicherheitsmodul 4 ist in einem weiteren Ausführungsbeispiel mit einem Datenspeicher 8 und/oder einem Rechner verbunden. Des Weiteren weist das Sicherheitssystem 1 einen Sensor 5 zur Erfassung einer Position und/oder Ausrichtung des elektronischen Geräts 2 im und/oder am Fahrzeug auf (das Fahrzeug ist nicht dargestellt). Das Sicherheitsmodul 4 ist in einem weiteren Ausführungsbeispiel über eine Datenverbindung 6 mit dem elektronischen Gerät 2 zum Austausch von Daten verbunden. Das Sicherheitsmodul 4 ist dazu ausgebildet, eine Übereinstimmung oder eine Abweichung von der vom Sensor 5 erfassten Position und/oder Ausrichtung des elektronischen Geräts 2 mit einer erwarteten Position und/oder Ausrichtung zu erkennen und bei einer erkannten Übereinstimmung der Zugriff und/oder das Programmieren des elektronischen Geräts 2 zu verhindern. Das Sicherheitsmodul 4 erlaubt bei bestimmungsgemäßer Montage des elektronischen Geräts 2 keinen Zugriff und/oder kein Programmieren des elektronischen Geräts 2. In einem Ausführungsbeispiel wird die Schnittstelle 3 dazu vollständig oder teilweise deaktiviert und/oder die Stromversorgung des elektronischen Geräts 2 unterbrochen. Das Sicherheitsmodul 4 ist in einem weiteren Ausführungsbeispiel über eine Datenverbindung 7 mit dem Sensor 5 zum Austausch von Daten verbunden. An dem elektronischen Gerät 2, insbesondere in dessen Position und/oder Ausrichtung im und/oder am Fahrzeug, muss also eine mechanische Veränderung, bevorzugt eine räumliche Veränderung, vorgenommen werden, die nicht über einen Fern-Zugriff möglich ist, so dass der Zugriff und/oder das Programmieren des elektronischen Geräts 2 ermöglicht wird. In einem Ausführungsbeispiel wird der Sensor 5 in oder an dem elektronischen Gerät 2 oder an dem Fahrzeug angeordnet, wodurch eine kostengünstige und zeitsparende Montage möglich ist.

Figur 2 zeigt ein Flussdiagramm zur Erläuterung der Schritte des Verfahrens zum Betreiben des Sicherheitssystems 1. Durch den Sensor 5 werden Daten über die tatsächliche Position und/oder Ausrichtung des elektronischen Geräts 2 erfasst 10. Das Sicherheitsmodul 4 führt einen Abgleich 11 der vom Sensor 5 erfassten Daten 10 über die tatsächliche Position und/oder Ausrichtung des elektronischen Geräts 2 mit Daten über die erwartete Position und/oder Ausrichtung des elektronischen Geräts 2 durch. Die Daten über die erwartete Position liegen entweder direkt im Sicherheitsmodul 4 vor, können aber auch durch einen weiteren Datenspeicher 8 bereitgestellt werden. Das Sicherheitsmodul 4 erkennt durch den Abgleich 11 der Daten, ob eine Abweichung oder Übereinstimmung 12 der Position und/oder Ausrichtung des elektronischen Geräts 2 im und/oder am Fahrzeug vorliegt. Basierend auf der vom Sicherheitsmodul 4 erkannten Abweichung oder Übereinstimmung regelt das Sicherheitsmodul 4 das elektronische Gerät 2, so dass bei einer Übereinstimmung oder einer minimalen Abweichung 12 der Position und/oder Ausrichtung des elektronischen Geräts 2 mit der erwarteten Position und/oder Ausrichtung des elektronischen Geräts 2 einen Zugriff und/oder ein Programmieren des elektronischen Geräts 2 verhindert wird 13, und dass bei einer erkannten Abweichung 12 der Position und/oder Ausrichtung des elektronischen Geräts 2 zu einer erwarteten Position und/oder Ausrichtung des elektronischen Geräts 2 einen Zugriff und/oder ein Programmieren des elektronischen Geräts 2 zugelassen wird. Das Sicherheitsmodul 4 erlaubt also bei bestimmungsgemäßer Montage des elektronischen Geräts 2 keinen Zugriff und/oder kein Programmieren, insbesondere werden Anfragen an das elektronische Gerät ignoriert. In einem weiteren Ausführungsbeispiel ist für den Zugriff und/oder zum Programmieren des elektronischen Geräts 2 zusätzlich eine Authentifizierung erforderlich.

## Patentansprüche

1. Sicherheitssystem (1) für ein elektronisches Gerät (2) eines Fahrzeugs, wobei das elektronische Gerät (2) programmierbar ist und eine Schnittstelle (3) aufweist, die für den Zugriff und/oder zum Programmieren des elektronischen Geräts (2) durch einen externen Zugriff nutzbar ist, mit einem Sicherheitsmodul (4), das zum Verhindern eines unbefugten Zugriffs und/oder eines unbefugten Programmierens des elektronischen Geräts (2) ausgebildet ist, mit einem Sensor (5) zur Erfassung einer Position und/oder Ausrichtung des elektronischen Geräts (2) im und/oder am Fahrzeug, **dadurch gekennzeichnet, dass** das Sicherheitsmodul (4) dazu ausgebildet ist, eine Übereinstimmung von der vom Sensor (5) erfassten Position und/oder Ausrichtung des elektronischen Geräts (2) mit einer erwarteten Position und/oder Ausrichtung, in der sich das Gerät (2) in und/oder an dem Fahrzeug befindet, wenn es bestimmungsgemäß im Fahrzeug verbaut ist, zu erkennen, und bei einer erkannten Übereinstimmung den Zugriff und/oder das Programmieren des elektronischen Geräts (2) zu verhindern.

2. Sicherheitssystem (1) nach Anspruch 1, **dadurch gekennzeichnet, dass** das Sicherheitsmodul (4) dazu ausgebildet ist, bei einer erkannten Übereinstimmung die Schnittstelle (3) vollständig oder teilweise zu deaktivieren.

3. Sicherheitssystem (1) nach einem der vorhergehenden Ansprüche,
**dadurch gekennzeichnet, dass** das Sicherheitssystem (1) zumindest eine dem elektronischen Gerät (2) zugeordnete/zuordenbare Schalteinrichtung aufweist, durch deren Betätigung eine für den Zugriff und/oder das Programmieren des elektronischen Geräts (2) notwendige elektrische Verbindung unterbrechbar ist.

4. Sicherheitssystem (1) nach einem der vorhergehenden Ansprüche, **dadurch gekennzeichnet, dass** der Sensor (5) in oder an dem elektronischen Gerät (2) oder an dem Fahrzeug angeordnet/anordenbar ist.

5. Sicherheitssystem (1) nach einem der vorhergehenden Ansprüche,
**dadurch gekennzeichnet, dass** der Sensor (5) ein berührungsfrei arbeitender Sensor, insbesondere ein Magnetsensor, ein Ultraschallsensor, ein Kamerasensor, ein Lagesensor und/oder ein Ausrichtungssensor ist.

6. Sicherheitssystem (1) nach einem der vorhergehenden Ansprüche,
**dadurch gekennzeichnet, dass** das Sicherheitsmodul (4) dazu ausgebildet ist, bei einer erkannten Abweichung den Zugriff und/oder das Programmieren des elektronischen Geräts (2) zuzulassen.

7. Elektronisches Gerät (2) für ein Fahrzeug, wobei das elektronische Gerät (2) ein Sicherheitssystem (1) nach einem der Ansprüche 1 bis 6 aufweist.

8. Elektronisches Gerät (2) nach Anspruch 7, **dadurch gekennzeichnet, dass** das elektronische Gerät (2) als ein Steuergerät des Fahrzeugs ausgebildet ist.

9. Fahrzeug, mit zumindest einem elektronischen Gerät (2) und mit einem dem elektronischen Gerät (2) zugeordneten Sicherheitssystem (1) nach einem der Ansprüche 1 bis 6.

10. Fahrzeug nach Anspruch 9, **dadurch gekennzeichnet, dass** der Sensor (5) des Sicherheitssystems (1) in oder an dem elektronischen Gerät (2) oder an einer das elektronische Gerät (2) tragenden oder zugeordneten Struktur des Fahrzeugs angeordnet ist.

11. Verfahren zum Betreiben eines Sicherheitssystems (1) nach einem der Ansprüche 1 bis 6, eines elektronischen Geräts (2) nach Anspruch 7 oder 8, oder eines Fahrzeugs nach Anspruch 9 oder 10, **dadurch gekennzeichnet, dass** ein unbefugter Zugriff und/oder ein unbefugtes Programmieren des elektronischen Geräts (2) verhindert wird, wenn eine Übereinstimmung der erfassten Position und/oder Ausrichtung des elektronischen Geräts (2) von der erwarteten Position und/oder Ausrichtung erkannt wird.

## Claims

1. Security system (1) for an electronic device (2) of a vehicle, the electronic device (2) being programmable and having an interface (3) that can be used for accessing and/or programming the electronic device (2) by means of external access, with a security module (4) that is designed to prevent unauthorized access to and/or unauthorized programming of the electronic device (2), with a sensor (5) for sensing a position and/or orientation of the electronic device (2) in and/or on the vehicle, **characterized in that** the security module (4) is designed to detect a match between the position and/or orientation of the electronic device (2) sensed by the sensor (5) and an expected position and/or orientation that the device (2) is in and/or on the vehicle when installed in the vehicle as intended, and to prevent the electronic device (2) from being accessed and/or programmed if a match is detected.

2. Security system (1) according to Claim 1, **characterized in that** the security module (4) is designed to deactivate the interface (3) completely or in part if a match is detected.

3. Security system (1) according to either of the preceding claims, **characterized in that** the security system (1) has at least one switching device that is/can be associated with the electronic device (2) and operation of which allows an electrical connection necessary for accessing and/or programming the electronic device (2) to be interrupted.

4. Security system (1) according to one of the preceding claims, **characterized in that** the sensor (5) is/can be arranged in or on the electronic device (2) or on the vehicle.

5. Security system (1) according to one of the preceding claims, **characterized in that** the sensor (5) is a contactlessly operating sensor, in particular a magnetic sensor, an ultrasonic sensor, a camera sensor, a position sensor and/or an orientation sensor.

6. Security system (1) according to one of the preceding claims, **characterized in that** the security module (4) is designed to permit the electronic device (2) to be accessed and/or programmed if a deviation is detected.

7. Electronic device (2) for a vehicle, the electronic device (2) having a security system (1) according to one of Claims 1 to 6.

8. Electronic device (2) according to Claim 7, **characterized in that** the electronic device (2) is in the form of a control unit of the vehicle.

9. Vehicle, with at least one electronic device (2) and with a security system (1) associated with the electronic device (2) according to one of Claims 1 to 6.

10. Vehicle according to Claim 9, **characterized in that** the sensor (5) of the security system (1) is arranged in or on the electronic device (2) or on a structure of the vehicle that supports or is associated with the electronic device (2).

11. Method for operating a security system (1) according to one of Claims 1 to 6, an electronic device (2) according to Claim 7 or 8, or a vehicle according to Claim 9 or 10, **characterized in that** unauthorized access to and/or unauthorized programming of the electronic device (2) is prevented if a match between the sensed position and/or orientation of the electronic device (2) and the expected position and/or orientation is detected.

## Revendications

1. Système de sécurité (1) pour un appareil électronique (2) d'un véhicule, l'appareil électronique (2) étant programmable et présentant une interface (3) pouvant être utilisée pour l'accès et/ou pour la programmation de l'appareil électronique (2) par un accès externe, comprenant un module de sécurité (4) qui est conçu pour empêcher un accès non autorisé et/ou une programmation non autorisée de l'appareil électronique (2), comprenant un capteur (5) pour détecter une position et/ou une orientation de l'appareil électronique (2) dans et/ou sur le véhicule, **caractérisé en ce que** le module de sécurité (4) est conçu pour reconnaître une correspondance entre la position et/ou l'orientation de l'appareil électronique (2) détectées par le capteur (5) et une position et/ou une orientation attendues, dans lesquelles l'appareil (2) se trouve dans et/ou sur le véhicule lorsqu'il est installé de manière conforme dans le véhicule, et pour empêcher, en cas de correspondance reconnue, l'accès et/ou la programmation de l'appareil électronique (2).

2. Système de sécurité (1) selon la revendication 1, **caractérisé en ce que** le module de sécurité (4) est conçu pour désactiver complètement ou partiellement l'interface (3) en cas de correspondance reconnue.

3. Système de sécurité (1) selon l'une quelconque des revendications précédentes, **caractérisé en ce que** le système de sécurité (1) présente au moins un dispositif de commutation associé/pouvant être associé à l'appareil électronique (2) et dont l'actionnement permet d'interrompre une liaison électrique nécessaire à l'accès et/ou à la programmation de l'appareil électronique (2).

4. Système de sécurité (1) selon l'une quelconque des revendications précédentes, **caractérisé en ce que** le capteur (5) est/peut être disposé dans ou sur l'appareil électronique (2) ou sur le véhicule.

5. Système de sécurité (1) selon l'une quelconque des revendications précédentes, **caractérisé en ce que** le capteur (5) est un capteur fonctionnant sans contact, en particulier un capteur magnétique, un capteur à ultrasons, un capteur de caméra, un capteur de position et/ou un capteur d'orientation.

6. Système de sécurité (1) selon l'une quelconque des revendications précédentes, **caractérisé en ce que** le module de sécurité (4) est conçu pour autoriser l'accès et/ou la programmation de l'appareil électronique (2) en cas d'écart détecté.

7. Appareil électronique (2) pour un véhicule, l'appareil électronique (2) présentant un système de sécurité (1) selon l'une quelconque des revendications 1 à 6.

8. Appareil électronique (2) selon la revendication 7, **caractérisé en ce que** l'appareil électronique (2) est réalisé sous la forme d'un appareil de commande du véhicule.

9. Véhicule comprenant au moins un appareil électronique (2) et comprenant un système de sécurité (1) selon l'une quelconque des revendications 1 à 6, qui est associé à l'appareil électronique (2).

10. Véhicule selon la revendication 9, **caractérisé en ce que** le capteur (5) du système de sécurité (1) est disposé dans ou sur l'appareil électronique (2) ou sur une structure du véhicule qui porte ou est associée à l'appareil électronique (2).

11. Procédé de fonctionnement d'un système de sécurité (1) selon l'une quelconque des revendications 1 à 6, d'un appareil électronique (2) selon la revendication 7 ou 8, ou d'un véhicule selon la revendication 9 ou 10, **caractérisé en ce qu'**un accès non autorisé et/ou une programmation non autorisée de l'appareil électronique (2) est empêché lorsqu'une correspondance entre la position et/ou l'orientation détectées de l'appareil électronique (2) et la position et/ou l'orientation attendues est reconnue.
